(19)

Europäisches
Patentamt
European
Patent Office
Office européen
des brevets

(11) **EP 2 824 418 A1**

(12) **EUROPEAN PATENT APPLICATION**

(43) Date of publication:
**14.01.2015 Bulletin 2015/03**

(51) Int Cl.:
*G01C 7/04* (2006.01)      *G01S 17/89* (2006.01)

(21) Application number: **13175826.0**

(22) Date of filing: **09.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **XenomatiX BVBA
3001 Leuven (BE)**

(72) Inventor: **Van den Bossche, Johan
3210 Linden (BE)**

(74) Representative: **IPLodge bvba et al
Technologielaan 9
3001 Heverlee (BE)**

(54) **Surround sensing system**

(57)     A system (100) for detecting the profile of an object. The system (100) comprises a radiation source (101) for generating a radiation pattern. The system (100) also comprises a detector (102) which has a plurality of pixels and a processor (103) for processing data from the detector (102) when radiation from the radiation source is reflected by an object and detected by the de-tector (102). The system also comprises a synchronization means (104) interfacing between the detector (102) and the radiation source (101). The radiation source (101) is designed for operating in pulsed mode and the synchronization means (104) can synchronize the pulses of the radiation source (101) with the sampling of the detector (102).

**FIG. 1**

EP 2 824 418 A1

## Description

## Field of the invention

The invention relates to the field of profile scanning of a scene or part thereof. More specifically it relates to systems and methods for detecting the profile of an object or person.

## Background of the invention

There are a large number of applications where knowledge of the 3D profile of an object is relevant. Different techniques exist for scanning the profile of an object. Basically they can be subdivided into radar based systems, ultrasound based systems and optical sensing systems.

Radar based systems have the advantage that they can sense a long range but have the disadvantage that they have a poor angular and depth resolution with regard to certain applications (e.g. for tracking the profile in a road).

Ultrasound based systems can be useful for short range sensing but their narrow bandwidth limits the depth sensitivity and the sampling resolution and the strong absorption in air limits the range to a few meter.

Optical sensing based methods can be subdivided in different types measuring the distance through time of flight measurements or by triangulation.

In time of flight methods the object is illuminated by a light source. From the delay between the emission and the detection the distance travelled by the light can be determined. The time of flight methods can make use of pulsed illumination.

In triangulation based systems, the unknown position of an object is calculated using trigonometry. An example of such a system is the Kinect system of Microsoft described in US8320621. In this system structured infra-red light (e.g circles) is projected and viewed with a 3D camera. This system is robust against daylight. But the depth of focus of a lens-based projection system is limited and the resolution/range of a single 3D camera is limited so that the use of the system is limited to indoor short-distance applications such a gaming.

In stereovision the distance to an object is determined from the local shift between corresponding parts in the images obtained by two cameras under different viewing angles or by one stereo camera with two lenses. Stereovision based systems can make use of existing set-ups and algorithms from robot vision, can operate using ambient illumination, and do not require projection. On the other hand stereovision based systems have the disadvantage that calibrated camera's with sufficient distance are required. Furthermore, sufficient structure in the images is required to enable cross correlation for parallax, it is difficult to detect flat surfaces and water, a sufficient number of pixels is required, the depth sensitivity is limited, and the cameras used should have a large dynamic range to cope with various light conditions. The biggest hurdle seems to be that stereovision based systems cannot work if there is insufficient structure in the object being scanned.

Therefore there is still room for improvement of surround sensing scan systems that can be used in outdoor situations scanning the profile of objects over a large range with a high resolution and with a high speed.

## Summary of the invention

It is an object of embodiments of the present invention to provide good systems and methods for determining the profile of an object.

It is an advantage of embodiments of the present invention that it is robust against varying conditions such as daylight and/or rain. Moreover, it is an advantage of embodiments of the current invention that it is robust against the light of other vehicles.

It is an advantage of embodiments of the present invention that scanning is possible over a range from 1 to 15 m, in some embodiments even over a range from 1 to 30 m. The maximal range can be improved by using better camera's and lasers. Use can be made of the benefits of using semiconductor technology for manufacturing such components. The profiling precision is depending on the range to be scanned. In embodiments according to the present invention, a precision of 1/1000 of the range can be obtained.

Precision here means precision in distance between the car and the road. The vertical precision 'local height of the road" can even be 10 times better.

It is an advantage of the embodiments of the present invention that a viewing angle of 1 radian horizontally and 1 radian vertically can be obtained. Depending on the application, one can choose for different horizontal and vertical angles. Furthermore, if larger viewing angles are required, more systems can be combined.

It is an advantage of embodiments of the present invention that they are robust against vibrations. It is an advantage of embodiments of the present invention that components used in systems according to embodiments of the present invention typically have a long lifetime.

It is an advantage of embodiments of the present invention that the average radiation power is below 1 mW per spot. In case a radiation pattern of 100x100 spots is used this results in an overall average radiation of 10 W. The power threshold is in agreement with commonly applied safety regulations. Furthermore, it is an advantage of embodiments of the present invention that the power consumption of systems according to embodiments of the present invention is low.

It is an advantage of embodiments of the present invention that they can be easily installed and that the alignment is easy and may even be automated. The initial alignment can e.g. be done by scanning a flat plane and recording the positions of the projected spots as initial reference. A possible change in relative position between projector and detector can easily be detected by observing the projected pattern as a whole.

It is an advantage of embodiments of the present invention that a low-weight and compact system can be provided. It is an advantage of embodiments of the present invention that a low cost system can be obtained, as e.g. it can be based on components that can be made using standard processing techniques. It is an advantage of at least some embodiments of the present invention that no mechanical scanning of the object under study is required resulting in a mechanically less complex system. It thereby is an advantage that the basic components can be available components such as for example CMOS and CCD cameras and laser arrays.

These components are readily available and

Because for the basic components such as CMOS and CCD cameras and laser arrays we profit for the steady increase in performance and decrease in cost.

It is an advantage of embodiments of the current invention that the performance is scalable.

Without changing the basic principles of the method the performance is increased by just using newer versions of camera and lasers. For instance in 3 years CMOS cameras increase from 1 megapixel to 4 megapixel and the same cost.

There are different tradeoffs that can be tuned depending on the application requirements (e.g. tradeoff between power and field of view), resulting in optimum characteristics for particular applications.

In at least some embodiments according to the present invention, the object for which the profile is to be determined is the road in front of a vehicle. In some embodiments according to the present invention, the profile information of the road in front of the vehicle is used for controlling the suspension system of the vehicle. It is an advantage of embodiments of the present invention, specifically when applied in automotive applications, that they are still working up to speeds of 50 m/s.

It is an advantage of embodiments of the current invention that besides the profile information of the monitored object also several other parameters can be derived. For example, when applied in an automotive environment, also the 3D orientation of a car, the speed of the car, the presence of approaching cars or other objects, the presence of water on the road surface, etc. can be obtained.

The above objective is accomplished by a method and device according to the present invention.

The present invention relates to a system for detecting the profile of an object, the system comprising, a radiation source for generating a radiation pattern, at least one detector having a plurality of pixels, a processor for processing data from the at least one detector when radiation from the radiation source is reflected by an object and detected by the at least one detector, a synchronization means interfacing between the at least one detector and the radiation source

whereby,

the radiation source is designed for operating in pulsed mode, and the synchronization means is adapted for synchronizing the at least one detector with the radiation source so that the image is only recorded during the pulses of the radiation source.

The radiation source may comprise at least one laser adapted for generating a plurality of laser spots. The laser spots may be irradiated onto the object.

The processor may be adapted for determining a profile of an object by determining a displacement of detected sports detected with the at least one detector with reference to predetermined reference spot positions. The predetermined reference spot positions may for example be determined in a calibration phase.

The radiation source may comprises at least one laser radiation source for generating the radiation pattern.

The radiation source may comprise a phase grating for simultaneously generating the combination of radiation spots. It is an advantage of embodiments of the present invention that efficient phase gratings can be obtained, the gratins comprising a system of grooves with a specific depth in a specific transparent material. In an advantageous embodiment, a set of horizontal and vertical grooves can be applied. The design furthermore is flexible so that it can be optimized with respect to the target specifications.

The radiation source may be constructed to generate the radiation pattern as a combination of radiation spots and whereby the radiation spots are generated sequentially in time.

The radiation source may comprise a MEMS-scanner. The detector may comprises a MEMS-scanner and the system may comprise a synchronization device for synchronizing the MEMS-scanner of the radiation source with a MEMS-scanner of the detector.

The system may comprise a shutter whereby the shutter, when closed, blocks radiation from arriving at the detector and whereby the synchronization means is adapted for synchronising the pulses of the radiation source with the opening and closing of the shutter.

The processor may be adapted for processing the detected data based on triangulation.

The obtained data can be used as an input for a more refined model based fitting of the profile of the road or object, such as spline fitting and even to more sophisticated models for the motion of the object.

The radiation source may be conceived for generating monochromatic radiation in the near infrared spectrum.

The radiation source may comprise a semiconductor laser.

The radiation source may comprise a single VCSEL source or a VCSEL array.

The at least one detector may be a CMOS or CCD sensor.

The system may comprise a small band spectral filter positioned in front of the camera.

The at least one detector may be a plurality of detectors, e.g. two detectors or more detectors. In addition to the triangulation principle based on a single detector, embodiments of the present invention also may make use of a parallax between different detectors. Furthermore embodiments of the present invention optionally also may be combined with stereovision.

The radiation source and the shutter may be adapted for pulsing with pulse widths in the microsecond range.

The system may comprise an interface for outputting obtained information.

The present invention also relates to a vehicle with controllable suspension, the vehicle comprising a system as described above, a suspension system, and a control system, whereby the control system is adapted for receiving profile information of the system for determining a profile of an object and is adapted for using the profile information for controlling the suspension system.

The present invention also relates to a camera, the camera comprising a system as described above whereby the system is adapted to add 3D information to the camera image making it possible to create a 3D image.

The present invention furthermore relates to a method for detecting the profile of an object, the method comprising emitting a pulsed radiation pattern on the object using a radiation source, detecting the reflected pattern using at least one detector having a plurality of pixels, whereby the detection is synchronized with the pulsed radiation pattern, and processing the data from the at least one detector for determining a profile of an object.

The present invention also relates to the use of a system as described above for measuring the profile of the road in front of a car.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

**Brief description of the drawings**

FIG. 1 gives a schematic overview of different components and their interactions in an exemplary system according to embodiments of the present invention.

FIG. 2 illustrates a schematic representation of an exemplary method for obtaining a profile, according to an embodiment of the present invention.

FIG. 3 illustrates a schematic representation of a triangulation principle as can be used in an embodiment of the present invention.

The drawings are only schematic and are non-limiting. In the drawings, the size of some of the elements may be exaggerated and not drawn on scale for illustrative purposes.

Any reference signs in the claims shall not be construed as limiting the scope.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the current invention reference is made to the near infrared region reference is made to radiation with wavelength between 800 and 1000 nm.

Where in embodiments according to the present invention reference is made to a radiation pattern, the radiation pattern is physically or logically composed of radiation spots characterized by their spot size and intensity.

Where in embodiments according to the present invention reference is made to triangulation, reference is made to the use of observation of an object under an angle and determining the distance to the spot based on a shift between a reference position and an observed position of a corresponding spot in the image viewed by the camera.

Where in embodiments of the present invention reference is made to a MEMS scanner reference is made to a MEMS scanning micro-mirror whereby the mirror can oscillate in at least one dimension.

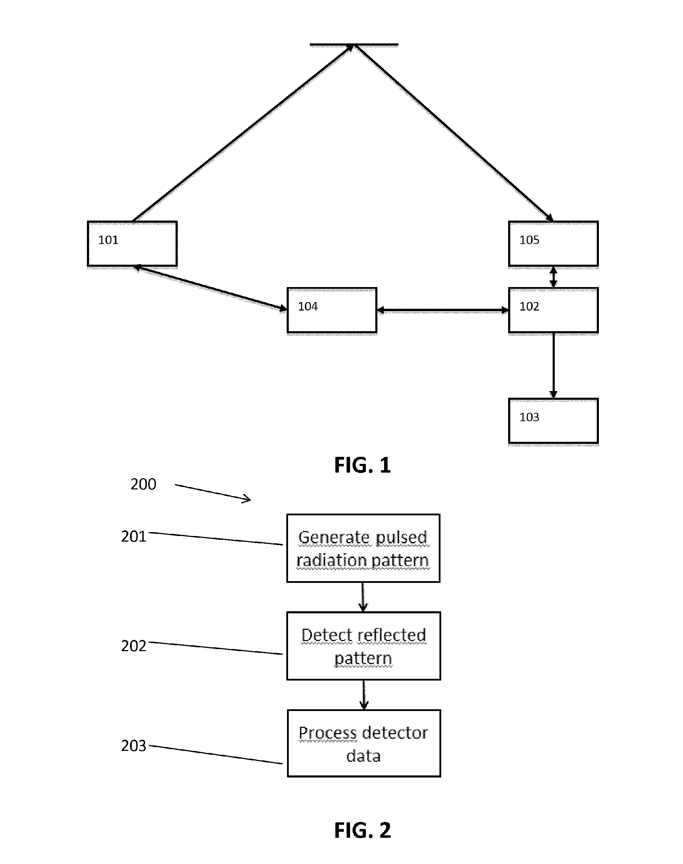

In a first aspect, the present invention relates to a system for detecting the profile of an object. A schematic overview of different components which are comprised in the system according to embodiments of the present invention are illustrated in FIG. 1. FIG. 1 shows a radiation source 101 for generating a pulsed radiation pattern. The radiation pattern advantageously is spot pattern.

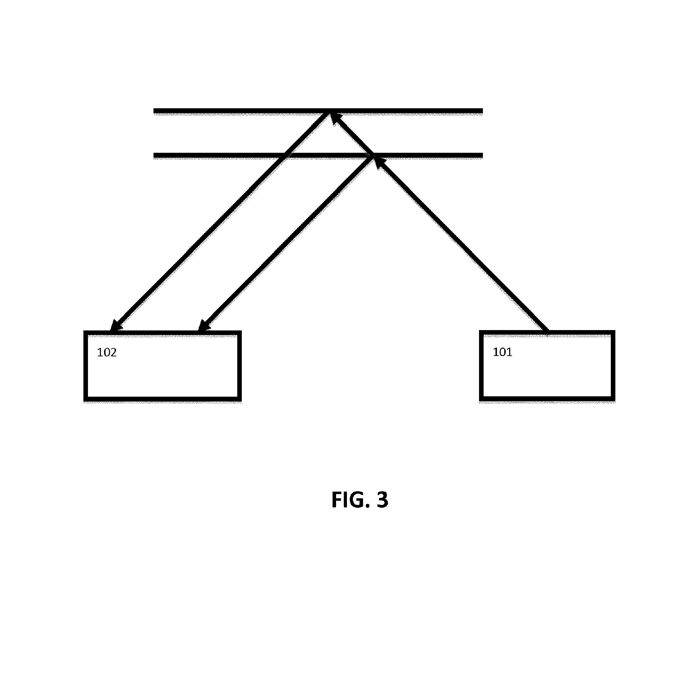

The radiation pattern is reflected by the object under study and captured by a detector 102 also shown in FIG. 1. The radiation source 101 and the detector 102 are synchronized by a synchronization means 104. In embodiments according to the present invention also a shutter 105 might be present whereby the shutter 105 is also synchronized by the synchronization means 104 such that it blocks radiation from the detector 102 as long as no radiation pattern is being transmitted. Alternatively, the detector may be oversampled and only the samples corresponding with time slots wherein pulses are given are considered. The processor 103 in FIG. 1 processes the data coming from the detector 102 thereby revealing profile information of the object under study. The processing advantageously can be based on triangulation. The processor may be adapted for determining a profile of an object by determining a displacement of detected spots, the spots being detected with the at least one detector with reference to predetermined reference spot positions. The triangulation principle used in embodiments of the present invention is illustrated by way of example in FIG. 3. The triangulation method used can be based on a single detector, although the invention should not be considered limited to systems comprising only a single detector.

By way of illustration, embodiments of the present invention not being limited thereto, the different elements of an exemplary system according to an embodiment of the present invention will further be discussed.

In embodiments of the current invention the radiation source 101 is designed to generate radiation, e.g. monochromatic radiation or radiation from a particular wavelength range, in the near infrared region. The near infrared region has the advantage that it is invisible to humans and that CMOS or CCD sensors are still sufficiently sensitive for radiation with a wavelength in this region. In this way, the user is not disturbed by the radiation. The radiation source 101 typically is adapted for extending over the complete object to be monitored. Optical elements therefore may be provided or may be part of the radiation source. In embodiments according to the present invention this object is a viewing scene in front of a car.

The object to be monitored is irradiated using a radiation pattern. In some embodiments according to the present invention this pattern is a regular or irregular array of spots, e.g. sharp spots. The size of the spots may be of the order of 1/1000 of the range. Thus 1 cm at a distance of 10 meter.

According to embodiments of the present invention, the irradiation is performed during short periods of time, i.e. in a pulsed manner. This has the advantage that a lot of irradiation power can be generated - in pulsed irradiation the momentaneous intensity can be significantly higher than in continuous wave - but that meanwhile the average radiation power can be kept low. In the particular example wherein a spot-like pattern is used for irradiating, the intensity is local on particular positions on the object, which also reduces the total amount of power required by the radiation source 101 to surpass the intensity of the daylight. Advantageously, the spotsize may be selected in relationship to the pixel size of the detector 102.

In embodiments according to the present invention irradiation pattern may be induced using laser beams. It is an advantage of embodiments of the present invention that laser beams can yield a very large depth of focus with simple optics. The irradiation pattern can be irradiated simultaneously. Alternatively, different parts of the irradiation pattern can be irradiated sequentially, such that over time the irradiation pattern is built up, but the irradiation pattern is not provided in a single illumination pulse.

Individual parts of the irradiation pattern may be, in one embodiment, may be obtained by positioning a MEMS scanner after the radiation source 101 for deflecting the laser beam in the wanted direction and thus irradiating the object in a scanning manner.

In some embodiments according to the present invention, the irradiation source comprises one or more semiconductor lasers. These semiconductor lasers have a very good cost/performance relationship.

In some embodiments according to the present invention where individual spots of a radiation pattern are transmitted simultaneously different alternatives exist to realize the radiation pattern. A single laser may be used in combination with a diffractive grating for inducing an array of spots. The laser must have sufficient power.

The peak power of the laser must be sufficient (order of 0.1 to 2 kilowatt) so that the intensity in every spot of the projected pattern surpasses the daylight. For a projected array of 100x100 spots and a range of 30 m the total peak power of the single laser must be of the order of 2 kilowatt. But the average (continuous) power of the individual spots may not surpass the safety requirements of 1 milliwatt. Thus for a pattern of 100x 100 spots the total average power of the single laser may not exceed 10 Watt. This high peak power versus low average power can be realised by using short pulse times of the order of 50 microseconds.

Another requirement for practical use is that the electric power of the laser does not exceed 50 Watts. But with an average optical power of 10 watts this requirement can easily be met for semiconductors lasers which have a large efficiency.

In case we use a VCSEL laser array instead of a single laser the power requirements of the single laser have to be met by the array as a whole.

The laser may be a surface edge emitting laser.

The irradiation source also may comprise a diffraction grating for generating a grid or other irradiation pattern. Different types of diffractive gratings could be used. For efficiency a phase grating in a transparent material can be used. Ease of manufacturing (simple and cheap) is enhanced if the phase grating has linear grooves in two orthogonal directions. The depth of the grooves typically may corresponds with a phase shift of 180°. The width of the grooves can be calculated such that the intensity envelope matches the required field of view. The FOV of source and detector is both of the order of 1 radian horizontally and 1 radian vertically

In other embodiments according to the present invention, where individual spots of the radiation pattern are transmitted simultaneously, a VCSEL array is used as radiation source 101. Such a VCSEL array may be an array with a low beam divergence. The size of the VCSEL may be 10x10, but may be larger. It is an advantage of embodiments using VSCEL arrays that the geometry of the array and the shape of the spots can be tuned depending on the application. The principle may be combined with scanning irradiation as will be discussed later, such that subsequently an array of spots is transmitted.

The detector 102 may be a CMOS or CCD detector. After the object under study is irradiated by the radiation source 101, the reflected radiation is detected by the detector 102. In order to avoid interference from daylight different precautions can be taken. In embodiments according to the present invention a small band spectral filter can be positioned in front of the detector 102. The small band filter only passes through radiation in the specific wavelength range emitted and blocks the rest of the daylight spectrum.

In embodiments according to the present invention, a synchronization means may be provided that synchronizes the detection with the pulses, resulting in the fact that unwanted irradiation on the detector outside the pulse time of the radiation source can be avoided. This can be implemented in a plurality of ways, e.g. by oversampling by the detector and only taking into account samples wherein a reply on the pulse is expected. Alternatively, a shutter 105 can be used in front of the detector 102. The synchronization means 104 then opens the shutter 105 during the time window the reflected radiation arrives at the detector 102. Therefore the synchronization means 104 gets its synchronization input signal from the radiation source 101. The time window is dependent on the pulse width and on the object range.

In embodiments according to the present invention, the detector 102 optics may be focused to the largest range so as to resolve the spots at that distance and to match it with the pixel size. However because the depth of focus is much smaller than the range, the images of the spots will be broadened at shorter distances. On the other hand the intensity of the spots increases with decreasing distance so that the accuracy in the determination of the position increases. Calculations show that this easily compensates the increased spot size. In embodiments according to the present invention the distance between the spots is chosen such that overlap of spots at the detector (102) side is avoided. In an exemplary embodiment the distance between the spots is equal to ten times the diameter of the spots.

In embodiments according to the present invention the detector 102 may have a number of pixels NxN and the detector 102 optics are selected to match this large number of pixels with the angular resolution (1/N = 1 millirad). Moreover the radiation source 101 and accompanying projection optics can be selected to have the same angular resolution (so that the spot size matches the pixel size).

In embodiments of the present invention, large ranges can be bridged. For example radiation spots can surpass the daylight intensity over a large range by a sufficient factor for accurate measurements hereby keeping the individual laserbeams below the safety guidelines of 1 milliwatt continuous. Such a range may e.g. be between 1m and 15m, or even between 1m and 30 m.

In embodiments according to the present invention, the system also comprises a processor 103 for processing the data received by the detector 102. The detected radiation pattern may for example be analyzed trough triangulation. For example if a spot pattern is used, the spot pattern is observed under a different angle with a detector, e.g. high resolution CMOS or CCD megapixel camera. The distance travelled by a light ray, being part of the radiation pattern, to a particular spot can then be determined by triangulation from the shift between the theoretical and observed position of the corresponding spot in the image viewed by the camera.

The position of a spot can be determined by image processing in which one calculates the weighted center of intensity of the pixels (cfr. center of mass). The calculation of a center of intensity is very simple and can be done in real time with simple and cheap hardware.

If the angular resolution of the radiation source 101 and the detector 102 are worse than 1/N then the observed spot size in the image is larger than one pixel. But since the spot profile is known, one can in principle obtain sub pixel accuracy by multipixel fitting of the whole spot. In an embodiment according to the present invention the theoretical resolution can be calculated using the following formulas. In the embodiment a pattern of light spots is generated by a radiation source 101 and the monitored object is the road in front of a car whereby:

- D is the distance between the radiation source 101 and the detector 102
- Z is the range over which the road is monitored
- N the number of pixels of the detector 102 in both directions
- The angular resolution of the projection and of the detection are 1/N
- The opening angle of the detector an optional lenses is 1 steradian

- H is the height of the projector above the road

The obtainable resolution can be subdivided in:

- d: the distance resolution
- v: the vertical resolution

The theoretical distance resolution can be calculated as:

$$d = \frac{Z^2}{D.N}$$

The theoretical vertical resolution in the profile of the road can be calculated as:

$$v = \frac{Z.H}{D.N}$$

Thus for a 4 Megapixel detector 101 (N=2000) D = 2 m H= 1m and Z = 20 m a distance resolution of 10 cm (0.5 %) and a vertical resolution of 5 mm can be obtained.

At a distance of 1 m the distance resolution is 0.5 mm and the vertical resolution is also 0.5 mm.

As can be seen in the formulas, both the distance resolution and the vertical resolution are inversely proportional to the distance D between the radiation source 101 and the detector 102. Since this distance can be made much larger than the distance between the lenses in a 3D camera, the depth resolution is then also proportionally better for the same illumination.

In one example, a spot profile design is used wherein an interspot distance of 10 spot diameters is present. This then corresponds with a grid of N/10 x N/10 spots. For a 1 Megapixel camera the grid then consists of 100x100 points. With a frame rate of 100 Hz we then efficiently sample the road in front of the tires with a vertical resolution of about 1 mm at a lateral sampling distance of 1 cm. The sampling distance in the moving direction depends on the speed of the vehicle.

At the maximal speed of 50m/sec the sampling distance in the moving direction is of the order of 5 mm. This is quite sufficient for most applications that one can envisage which makes the concept very generic.

The maximal continuous power of 100x100 spots (at the safety level of 1milliwatt) is then 10 watt which is within all realistic requirements.

In embodiments of the current invention processing the data from the detector 102 can be done on binarized images. It is an advantage of embodiments of the current invention that the required processing power of the processor 103 for processing the data is limited.

For projecting a grid of 100x100 points at a repetition rate of 100 Hz a peak power of the order of 100 Watt and an average power of 10 Watt is required, as also discussed above. A first estimation shows that even with an isotropic reflection coefficient of 1/1000 the total number of detected photons per pixel is above the detection sensitivity of the camera. For triangulation, the radiation source 101, the detector 102, and the object under study form a triangle. The line between the detector and the radiation source 101 is known. The radiation angle is known, allowing to determine distances.

In some embodiments according to the present invention, instead of simultaneously projecting the individual spots of the radiation pattern, the individual spots or groups of spots of the radiation pattern are transmitted sequentially by the radiation source 101.

This can be realized by projecting a pulsed laser beam on a scanner, e.g. a micro-machined scanner, the micro-machined scanner having two degrees of freedom. In embodiments according to the present invention a complete image of 1000x1000 spots can be projected with a repetition rate of up to 30 Hz

In one embodiment, at the receiving side, a CMOS or CCD detector 102 captures the pulsed radiation source 101 after it was reflected by the object under study. At the receive side, similar embodiments can be realized as is the case for simultaneous projection of the radiation pattern. The radiation source 101 and the detector 102 are synchronized such that each transmit angle can be associated with a detection spot on the detector 102.

In a second embodiment, the receive side also comprises a micro-machined scanner with 2 degrees of freedom. The scanner can track the reflected radiation, by synchronously moving with the micro-machined scanner at the transmit side.

The radiation captured by the micro-machined scanner is projected on to a photodetector (an analog linear photosensitive detector). In this way, an optical scanner with a high dynamic range can be realized. A radiation pattern comprising 1000x1000 spots can be transmitted and detected with a repetition rate of up to 30 Hz using such an embodiment.

In embodiments according to the present invention the profile of the monitored object is reconstructed through triangulation on the received radiation pattern knowing the transmitted radiation pattern. The radiation pattern can be transmitted sequentially or simultaneously. In order to surpass daylight interference the power of the transmitted radiation pattern is increased keeping the average power constant by decreasing the transmitting pulse width.

The following example concerns the application of a system 100, according to an embodiment of the present invention, on a vehicle for monitoring the profile of the road in front of the vehicle.

To have a large range of visibility the radiation power should be sufficiently high.

For a range Z, the area that is observed is of the order of $Z^2/2$ Watt. The daylight in our country has a power of 100 Watt/m2.

Thus if one wants to surpass the daylight by a factor 5 one needs a power of $250.Z^2$ Watt. If we use monochromatic light and a spectral filter, one can gain a factor of 50. Thus one needs an optical power of $5.Z^2$ watt. Thus for a range of 30 m one needs an optical power of 5000 Watt. Nevertheless, using the laser in pulsed mode and with a required peak power of, 5000 Watt, if the limit on the average power is only 10 Watt one needs a peak power that is 500 times larger. This can be done by using pulses of 1/500 second or 50 microsecond.

$$T = \frac{1}{Z^3}$$

The detector 102 only captures incoming radiation when radiation pulses are arriving. Therefore the detector is synchronized with the radiation source 101 through the synchronization means 104.

In case of a camera of 1 Megapixel the number of measurements per second is also of the order of 1 million. When the vehicle moves at a speed of 50 m/s and the road has a width of 20 m the road will be sampled with a resolution of 3x3 cm.

For time of flight based systems, monitoring the same range of 30 m, a radiation beam requires 0.2 $\mu$s to travel the whole distance back and forth. During this time the detector 102 is open monitoring the complete field of view. This means that with a fixed average power of 10 Watt illumination over only 1/100 of a second is possible. It also means that with a required detector opening time of 0.2 $\mu$s only 10000 measurements per second can be achieved. Therefore embodiments according to the present invention can monitor at measurement rates which are a factor 20 better than time of flight based systems.

In a second aspect, the present invention relates to vehicles in which the profile detection system 100 is implemented for monitoring road conditions and as input for controlling the suspension system of the vehicle.

In embodiments according to the present invention, the system for detecting the profile of an object is placed in front of a vehicle. The object under study is in that case the road in front of the vehicle. Ranges of 1m to 15 m, even 1m up to 30 m in front of the car can be monitored.

In advantageous embodiments, the profile detection system 100 interfaces with the suspension system through an interface or output means. The data may be communicated to a controller for controlling the active suspension system. The result is that the vehicle smoothly moves over the road, also referred to as "flying carpet". Note that the image of the viewing scene is taken repeatedly with the frame rate of the camera. Thus the profile of the road is continuously updated and fed back to the active suspension system.

In embodiments according to the present invention, the depth information of the road in front of the car detected by the profile detection system can be used as a 3D component that can be added to the image of a color camera to render this image into a 3D image.

It is an advantage of embodiments of the present invention that the system can also be used for warning the driver for bad conditions, such as for example rain or snow.

In embodiments according to the present invention, a processor can also be used for deriving the speed of the car from the data coming from the profile detection system. In embodiments according to the present invention, the orientation of the car with regard to the road can be derived from the data coming from the profile detection system. The orientation can then be expressed as the car making an angle with the central line of the road, or in any other suitable way. A processor adapted for deriving such information may be embedded in the profile detection system or in another system, e.g. control system of the car.

In embodiments according to the present invention the presence and speed of approaching objects can also be detected using the profile detection system. A processor adapted for deriving such information may be embedded in the profile detection system or in another system, e.g. control system of the car.

The output of the profile detection system mounted on a vehicle can thus be used, not only for the suspension system, but as an input for several active components in a car enabling the car to be autonomously controlled.

It is an advantage of embodiments of the present invention that they can be combined with other techniques for extending the possibilities. For example, in one embodiment, the system may be extended with a radar system in order to extend the range that can be monitored.

In a third aspect, the present invention relates to a method for detecting the profile of an object. Such a method can advantageously be used in combination with a system as described in the first aspect, although embodiments of the present invention are not limited thereto. The method may advantageously be used for determining a profile of a road. The method may be incorporated in a method for controlling a suspension of a car, the method comprising performing a method for deterring the profile of a road and a step of using such information for actively controlling a suspension. Nevertheless, the method for detecting the profile of an object also may be used outside automotive, for any other suitable application.

In a first step 201 a radiation pattern is emitted on the object under study using a radiation source. The radiation pattern can be emitted in one shot (i.e. simultaneously) or sequentially. In any case, the radiation pattern is emitted in a pulsed manner. The latter advantageously results in a better signal to noise resolution, as the amount of power that can be provided during the pulse can be higher, thus resulting in less disturbance of environmental light, such as e.g. daylight. In a second step 202, the reflected pattern is detected using a detector 102. The detector has a plurality of pixels such that it can detect the complete reflected radiation pattern with a resolution that is sufficient to resolve the pattern. The detection is synchronized with the radiation through a synchronization means 104. In a third step 203, the data from the detector (102) is processed using a processor (103). Triangulation based methods on the data allow to retrieve profile information from that data. The method may comprise an auto-calibration phase. A schematic representation of a method according to embodiments of the present invention is shown in FIG. 2.

## Claims

1. A system (100) for detecting the profile of an object, the system comprising,

   - a radiation source (101) for generating a radiation pattern,
   - at least one detector (102) having a plurality of pixels,
   - a processor (103) for processing data from the at least one detector (102) when radiation from the radiation source is reflected by an object and detected by the at least one detector (102),
   - a synchronization means (104) interfacing between the at least one detector (102) and the radiation source (101)
   whereby,
   - the radiation source (101) is designed for operating in pulsed mode, and
   - the synchronization means (104) is adapted for synchronizing the at least one detector (102) with the radiation source (101) so that detection by the detector of radiation to be processed is detected only during the radiation pulses.

2. A system (100) according to any of the previous claims, whereby the radiation source (101) comprises at least one laser adapted for generating a plurality of radiation laser spots.

3. A system (100) according to the previous claim, whereby the processor is adapted for determining a profile of an object by determining a displacement of detected spots detected with the at least one detector with reference to predetermined reference spot positions.

4. A system (100) according to any of the previous claims, wherein the processor is adapted for processing of the detected data based on triangulation.

5. A system (100) according to any of the previous claims, wherein the radiation source (101) comprises a phase grating for simultaneously generating the radiation pattern.

6. A system (100) according to any of claims 1 to 4, whereby the radiation source (101) is constructed to generate the radiation pattern as a combination of radiation spots and whereby the radiation spots are generated sequentially in time.

7. A system (100) according to claim 6, whereby the radiation source (101) comprises a MEMS-scanner.

8. A system (100) according to any of claims 6 or 7, whereby the at least one detector (102) comprises a MEMS-scanner and whereby the system (100) comprises a synchronization device for synchronizing the MEMS-scanner of the radiation source (101) with a MEMS-scanner of the detector (102).

9. A system (100) according to any of the previous claims, the system comprising a shutter (105) whereby the shutter (105), when closed, blocks radiation from arriving at the at least one detector (102) and whereby the synchronization means (104) is adapted for synchronizing the pulses of the radiation source (101) with the opening and closing of the shutter (105).

10. A system (100) according to any of the previous claims, whereby the radiation source (101) is conceived for generating monochromatic radiation in the near infrared spectrum and/or wherein the radiation source comprises a semiconductor laser and/or wherein the radiation source comprises a single VCSEL source or a VCSEL array.

11. A system (100) according to any of the previous claims, wherein the at least one detector is a CMOS or CCD sensor and/or wherein the system comprises a small band spectral filter positioned in front of the camera (102), and/or wherein the at least one detector is a plurality of detectors the system in addition making use of parallax between the plurality of detectors and/or of stereovision.

12. A vehicle with controllable suspension, the vehicle comprising a system (100) according to any of the previous claims,
a suspension system, and
a control system,
whereby the control system is adapted for receiving profile information of the system for determining a profile of an object and is adapted for using the profile information for controlling the suspension system.

13. A camera, the camera comprising a system (100) according to any of the previous claims whereby the system (100) is adapted to add 3D information to the camera image based on information obtained from the system, making it possible to create a 3D image.

14. A method (100) for detecting the profile of an object, the method comprising the following steps:

- emitting (201) a pulsed radiation pattern on the object using a radiation source (101),
- detecting (202) the reflected pattern using a detector (102) having a plurality of pixels, whereby the detection is synchronized with the pulsed radiation pattern for detecting radiation to be processed only during the radiation pulses, and
- processing (203) the data from the detector (102) for determining a profile of an object.

15. Use of a system (100) according to any of the claims from 1 to 11 for measuring the profile of the road in front of a car.

**FIG. 1**

200

201 — Generate pulsed radiation pattern

202 — Detect reflected pattern

203 — Process detector data

**FIG. 2**

**FIG. 3**

Europäisches
Patentamt

European
Patent Office

Office européen
des brevets

# EUROPEAN SEARCH REPORT

| Application Number |
| --- |
| EP 13 17 5826 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2012/181650 A1 (MASE MITSUHITO [JP] ET AL) 19 July 2012 (2012-07-19) * paragraph [0034]; figures 1,3 * | 1-15 | INV. G01C7/04 G01S17/89 |
| X | US 2013/128257 A1 (STETTNER ROGER [US] ET AL) 23 May 2013 (2013-05-23) * paragraphs [0025], [0033], [0034] * | 1,3-15 | |
| X | US 2004/119838 A1 (GRIFFIS ANDREW [US] ET AL) 24 June 2004 (2004-06-24) * paragraphs [0210] - [0221] * | 1-15 | |
| X | US 4 757 200 A (SHEPHERD ORR [US]) 12 July 1988 (1988-07-12) * column 4, lines 9-20 * | 1-15 | |
| X | US 5 040 116 A (EVANS JR JOHN M [US] ET AL) 13 August 1991 (1991-08-13) * column 3, line 44 - column 4, line 35 * * column 7, lines 44-48 * | 1-15 | |
| A | US 2012/203428 A1 (CHOI DAVE [JP] ET AL) 9 August 2012 (2012-08-09) * paragraphs [0006], [0007] * | 12 | TECHNICAL FIELDS SEARCHED (IPC) G01C G01S |

The present search report has been drawn up for all claims

| Place of search | Date of completion of the search | Examiner |
| --- | --- | --- |
| The Hague | 16 December 2013 | Asthalter, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 5826

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2013

| Patent document cited in search report | Publication date | Patent family member(s) | Publication date |
|---|---|---|---|
| US 2012181650    A1 | 19-07-2012 | EP        2508916 A1<br>EP        2533288 A2<br>JP     2011112614 A<br>KR   20120099115 A<br>KR   20120109470 A<br>US     2012181650 A1<br>US     2012235272 A1<br>WO     2011065279 A1 | 10-10-2012<br>12-12-2012<br>09-06-2011<br>06-09-2012<br>08-10-2012<br>19-07-2012<br>20-09-2012<br>03-06-2011 |
| US 2013128257    A1 | 23-05-2013 | NONE | |
| US 2004119838    A1 | 24-06-2004 | US     2004119838 A1<br>US     2011255072 A1 | 24-06-2004<br>20-10-2011 |
| US 4757200       A | 12-07-1988 | NONE | |
| US 5040116       A | 13-08-1991 | NONE | |
| US 2012203428    A1 | 09-08-2012 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8320621 B